(19) Europäisches Patentamt
European Patent Office
Office européen des brevets

(11) EP 0 765 915 A1

(12) **DEMANDE DE BREVET EUROPEEN**

(43) Date de publication:
**02.04.1997 Bulletin 1997/14**

(51) Int Cl.6: **C08L 83/06**, C08K 3/26, C08J 9/08

(21) Numéro de dépôt: **96420300.4**

(22) Date de dépôt: **20.09.1996**

(84) Etats contractants désignés:
**AT BE CH DE DK ES FI FR GB GR IE IT LI LU NL PT SE**

(30) Priorité: **29.09.1995 FR 9511687**

(71) Demandeur: **RHONE-POULENC CHIMIE**
**92408 Courbevoie Cédex (FR)**

(72) Inventeur: **Giraud, Yves**
**69110 Ste Foy les Lyon (FR)**

(74) Mandataire: **Trolliet, Maurice et al**
**RHONE-POULENC CHIMIE,**
**Direction de la Propriété Industrielle,**
**Centre de Recherches des Carrières,**
**B.P. 62**
**69192 Saint-Fons Cédex (FR)**

(54) **Composition organopolysiloxane pour mousse élastomère**

(57) Dans une composition organopolysiloxanique génératrice de mousse élastomère, comprenant au moins un polyacyloxyorganopolysiloxane obtenu par fonctionnalisation, par un polyacyloxysilane, d'au moins une huile réactive qui est un polysiloxane polyhydroxylé destiné à réagir en présence d'eau pour former l'élastomère avec formation d'acide de formule R'COOH, dans laquelle R' représente un radical hydrocarboné exempt d'insaturation aliphatique et ayant de 1 à 15 atomes de carbone, un agent porophore et éventuellement de l'eau, l'agent porophore est au moins un carbonate acide ou neutre d'un métal alcalin ou alcalino-terreux qui, par réaction avec l'acide R'COOH, donne du gaz carbonique et préférentiellement de l'eau.

Objets, notamment joints, ainsi obtenus et kit pour mélange statique.

FIG. 2

$$CH_3COOH + CO_3HNa \longrightarrow CH_3COONa + H_2O + CO_2$$

$$H_2O + CH_3COO\text{-}Si\equiv \longrightarrow HO\text{-}Si\equiv + CH_3COOH$$

$$\equiv Si\text{-}OH + CH_3COO\text{-}Si\equiv \longrightarrow \equiv Si\text{-}O\text{-}Si\equiv + CH_3COOH$$

---

$$CH_3COOH + CO_3HNa + 2\ CH_3COO\text{-}Si\equiv \longrightarrow \equiv Si\text{-}O\text{-}Si\equiv + CH_3COONa + CO_2 + 2\ CH_3COOH$$

EP 0 765 915 A1

## Description

La présente invention a trait à de nouvelles compositions organopolysiloxaniques destinées à générer une mousse élastomère. La présente invention a également pour objet un procédé permettant leur fabrication ainsi que les mousses élastomères obtenues.

Dans le domaine industriel, les caractéristiques recherchées pour une mousse silicone sont les suivantes :

- aisance de mise en oeuvre (à basse température avec ou sans traitement thermique ultérieur, avec ou sans mélangeur dynamique si cela est possible)
- obtention d'une mousse à cellules fermées
- densité comprise entre 0,3 et 0,7
- faible dureté (de 20 à 60 SHORE 00 - inférieur ou de l'ordre de 5 SHORE A)
- propriétés mécaniques (en particulier, résistance au déchirement)
- adhérence (sur matières plastiques, en particulier)
- faible Déformation Rémanente à la Compression (à température ambiante et en température)
- bonne tenue thermique
- bonne résistance chimique (tenue aux huiles, etc.)
- bonne résistance aux UV
- bonne tenue au feu (caractéristique valable surtout pour les applications dans le domaine du bâtiment).

Les mousses silicones sont, dans la majorité des cas, obtenues :

1/ chimiquement en utilisant la réaction SiH-SiOH qui permet de libérer de l'hydrogène. Les mousses ainsi obtenues nécessitent, pour présenter des caractéristiques acceptables, l'utilisation d'un mélangeur dynamique et même ainsi la régularité du moussage est assez délicate à assurer. Le coût de ce type de produit est relativement élevé.
2/ mécaniquement par introduction d'un gaz (azote) dans le produit mono-composant sous pression et passage dans un mélangeur dynamique. Cette technique permet d'accéder à des mousses ayant de bonnes caractéristiques, mais elles nécessitent un équipement très lourd et onéreux.
3/ chimiquement en utilisant un agent porophore du type de l'azodicarbonamide, qui va permettre de libérer de l'azote, du gaz carbonique et de l'ammoniaque. Ce type d'agent porophore, malgré le fait qu'il est très largement utilisé pour d'autres matériaux, pose de graves problèmes de toxicité (libération d'hydrazine).

Il existe d'autres techniques telles que les micro-ondes (US-A-4 026 844), l'utilisation d'un carbonate de calcium avec de l'acide carboxylique (EP-A-235 052).

Parmi les trois types de techniques cités au-dessus, le premier (SiH-SiOH) est le plus largement utilisé.

L'utilisation d'agent porophore en décomposition thermique, en dehors du problème de toxicologie, est très délicat à mettre en oeuvre du fait qu'il nécessite un traitement thermique. Cette technique est très souvent réservée aux élastomères vulcanisables à chaud. Il est également possible de provoquer une décomposition chimique des agents porophores (l'azodicarbonamide se décomposant en présence de NaOH et de sels métalliques). Cette technique est peu utilisée dans le cas des silicones.

Un autre agent porophore, le bicarbonate de sodium, était utilisé depuis 1941 pour l'expansion d'élastomère en décomposition thermique. Il a été largement utilisé, et reste utilisé, dans le cas du caoutchouc naturel et du SBR (Styrène Butadiène Rubber) pour les applications telles que les mousses support de moquette et également pour fabriquer des profilés de PVC rigide pour des applications telles que les cadres de fenêtres. Il est aujourd'hui remplacé par des agents porophores tels que l'azodicarbonamide. Le bicarbonate de sodium est également utilisé comme additif de tenue au feu notamment dans le cas de résines polyesters. D'autre part, EP-A-235 052 a proposé d'associer carbonate de calcium et acide carboxylique pour une décomposition à température ambiante ou supérieure pour des élastomères vulcanisables à froid de polyaddition.

La présente invention a pour objectif de fournir un moyen pour assurer le moussage des compositions vulcanisables à froid de polycondensation, le moussage devant assurer l'obtention des caractéristiques attendues pour une mousse silicone.

Un autre objectif de l'invention est de fournir un tel moyen qui puisse être mis en oeuvre aussi bien en mélangeur statique qu'en mélangeur dynamique.

Un autre objectif encore de l'invention est de fournir un tel moyen qui soit de mise en oeuvre simple et aisée et soit peu onéreux.

La demanderesse a maintenant trouvé de manière très surprenante que l'utilisation de bicarbonate de sodium au sein d'une composition organopolysiloxanique comprenant un polyacétoxyorganopolysiloxane, produit de la réaction

entre une huile polydiméthylsiloxane α, ω hydroxylée et le réticulant méthyltriacétoxysilane, permettait la génération d'eau in situ, par conséquent l'obtention d'une réticulation rapide et homogène, et d'autre part la génération d'un moussage grâce au gaz carbonique libéré lors de la réaction. Le mécanisme réactionnel serait le suivant :

$$CO_3HNa + CH_3COOH \text{ --> } CH_3COONa + CO_2 + H_2O.$$

La réaction est alimentée en acide acétique par l'hydrolyse des fonctions acétoxy de l'huile. La réaction est remarquable en ce que l'on obtient le moussage et une accélération de la réticulation.

La demanderesse a également trouvé que ce principe peut être étendu aux compositions dans lesquelles le réticulant est plus généralement un polyacyloxysilane. De même, la demanderesse a trouvé qu'il était possible d'étendre ce principe aux carbonates acides ou neutres d'un métal alcalin ou alcalino-terreux qui, par réaction avec un acide acyloxy, produit du gaz carbonique et de l'eau. De même, ce principe peut être étendu à ceux des carbonates dont la réaction ne produit pas d'eau ; dans ce cas, un apport d'eau extérieur permet d'assurer l'apport nécessaire à l'hydrolyse des fonctions acyloxy.

L'invention permet de pallier les inconvénients et insuffisances des systèmes de moussage antérieurs et de conduire à des conditions de réticulation optimales à température ambiante et à des mousses ayant les caractéristiques attendues pour les mousses silicones industrielles et tout particulièrement pour les joints d'étanchéité utilisés dans un environnement thermique sévère. L'invention est en outre remarquable par le fait qu'elle ne nécessite qu'un réactif supplémentaire en mettant à profit la composition élastomérique elle-même.

La présente invention a donc pour objet une composition organopolysiloxanique génératrice de mousse élastomère, comprenant au moins un polyacyloxyorganopolysiloxane obtenu par fonctionnalisation, par un polyacyloxysilane, d'au moins une huile réactive qui est un polysiloxane polyhydroxylé destiné à réagir en présence d'eau pour former l'élastomère avec formation d'acide de formule R'COOH, dans laquelle R' représente un radical hydrocarboné exempt d'insaturation aliphatique, ayant de 1 à 15 atomes de carbone, la composition comprenant aussi un agent porophore et éventuellement de l'eau, la composition comprenant à titre d'agent porophore au moins un carbonate acide ou neutre d'un métal alcalin ou alcalino-terreux qui, par réaction avec de l'acide R'COOH, donne du gaz carbonique et préférentiellement de l'eau. On préfère que l'agent porophore soit un bicarbonate et de préférence le bicarbonate de sodium. Les bicarbonates ou hydrogénocarbonates sont préférés dans la mesure où ils conduisent à l'obtention de gaz carbonique et d'eau lors de leur réaction avec l'acide R'COOH, cette génération d'eau in situ permettant très avantageusement d'obtenir une réticulation rapide et homogène tandis que se produit la génération du moussage grâce au gaz carbonique libéré lors de la réaction susdite.

De préférence, le carbonate, avantageusement bicarbonate, est hydraté, notamment à raison de 0,01 à 20 % en poids d'eau, de préférence de 0,1 à 3 %. A cet effet de l'eau peut être additionnée au carbonate avant l'introduction de ce dernier dans la composition pour ajuster le degré d'hydratation du carbonate à la valeur souhaitée. Dans le cas de carbonates n'entraînant pas la formation d'eau in situ, on se situe plutôt dans les valeurs élevées du domaine de 0,01 à 20 %.

En général, la composition comprendra de 1 à 50 % en poids de carbonate par rapport à la composition totale, de préférence de 10 à 35 % en poids. De même, la granulométrie du carbonate pourra être notamment comprise entre 5 et 100 μm, de préférence entre 20 et 30 μm, en particulier de l'ordre de 25 μm. On trouve dans le commerce des bicarbonates de sodium appropriés dont la pureté est généralement supérieure à 99 %.

La demanderesse a trouvé qu'il était préférable de disposer d'un large excès de réticulant pour deux raisons majeures :

- cela permet de générer plus d'acide R'COOH lors de la mise en présence du carbonate, de préférence bicarbonate, et donc de provoquer un moussage et une réticulation plus rapides et efficaces ;
- cela rend en outre possible l'utilisation d'une huile réactive à fonctions hydroxyles pour "empâter" le carbonate, de préférence bicarbonate ; on évite donc avantageusement l'utilisation d'une huile non réactive qui présente des inconvénients en ce qui concerne les propriétés de la mousse obtenue et notamment l'exsudation. D'autre part, dans le cas où la composition selon l'invention se présentera en deux parties, à savoir une partie A comprenant le polyacyloxyorganopolysiloxane obtenu à partir du polysiloxane polyhydroxylé et du réticulant et une partie B comprenant le carbonate et cette huile réactive, cette dernière, lors du mélange des parties A et B, pourra être très avantageusement fonctionnalisée par le réticulant restant et ainsi à la fois participer au réseau élastomérique et générer une quantité d'acide R'COOH initiale qui permettra de lancer la réaction avec le carbonate.

En conséquence, selon l'invention, le polyacyloxyorganopolysiloxane est obtenu, de préférence, par fonctionnalisation du polysiloxane polyhydroxylé par un polyacyloxysilane dans des conditions telles que le rapport molaire fonctions acyloxy du réticulant/fonctions hydroxyles du polysiloxane polyhydroxylé est supérieur à 1, de préférence, compris

entre 2 et 10.

De manière préférée, les réticulants selon l'invention sont au moins un composé répondant à la formule

$$R_p\ Si(OCOR')_{4-p}$$

dans laquelle le symbole R représente un radical hydrocarboné ayant de 1 à 8 atomes de carbone, substitués ou non par des atomes d'halogènes ou des groupes cyano, le symbole R' représente un radical hydrocarboné exempt d'insaturation aliphatique, ayant de 1 à 15 atomes de carbone, et le symbole p étant 0 ou 1.

De préférence, les radicaux hydrocarbonés R, ayant de 1 à 8 atomes de carbone, substitués ou non par des atomes d'halogènes ou des groupes cyano, peuvent être choisis parmi :

- les radicaux alcoyles et halogénoalcoyles ayant de 1 à 8 atomes de carbone tels que les radicaux méthyles, éthyles, n-propyles, isopropyles, n-butyles, n-pentyles, n-hexyles, éthyl-2 hexyles, n-octyles, trifluoro-3,3,3 propyles, trifluoro-4,4,4 butyles, pentafluoro-4,4,4,3,3 butyles,
- les radicaux cycloalcoyles et halogénocycloalcoyles ayant de 4 à 8 atomes de carbone tels que les radicaux cyclopentyles, cyclohexyles, méthylcyclohexyl difluoro-2,3 cyclobutyles, difluoro-3,4 méthyl-5 cycloheptyles,
- les radicaux alcényles ayant de 2 à 4 atomes de carbone tels que les radicaux vinyles, allyles, butène-2 yles,
- les radicaux aryles et halogénoaryles ayant de 6 à 8 atomes de carbone tels que les radicaux phényles, tolyles, xylyles, chlorophényles, dichlorophényles, trichlorophényles,
- les radicaux cyanoalcoyles dont les chaînons alcoyles ont de 2 à 3 atomes de carbone tels que les radicaux β-cyanoéthyles et γ-cyanopropyles.

Quant au symbole R', il représente un radical choisi dans le groupe constitué :

- des radicaux alcoyles ayant de 1 à 15 atomes de carbone tels que les radicaux méthyles, éthyles, n-propyles, n-butyles, n-pentyles, éthyl-1 pentyles, n-hexyles, éthyl-2 hexyles, n-octyles, néodécyles, n-décyles, n-dodécyles, n-pentadécyles,
- des radicaux cycloalcoyles ayant de 5 à 6 atomes de carbone nucléaire tels que les radicaux cyclopentyles et cyclohexyles,
- des radicaux aryles ayant de 6 à 8 atomes de carbone tels que les radicaux phényles, tolyles, xylyles.

A titre d'exemples d'agents réticulants, peuvent être cités ceux répondant aux formules suivantes :

$CH_3Si(OCOCH_3)_3$, qui est le préféré

$$C_2H_5Si\text{-}(OCOCH_3)_3$$

$$CH_2{=}CHSi(OCOCH_3)_3$$

$$C_6H_5Si\text{-}(OCOCH_3)_3$$

$$CH_3Si[OCOCH(C_2H_5)(CH_2)_3\text{-}CH_3]_3$$

$$CF_3CH_2CH_2Si(OCOC_6H_5)_3$$

$$CH_3Si(OCOC_6H_5)_3$$

$$CH_3Si(OCOCH_3)_2[OCOCH\text{-}(CH_2)_3CH_3]$$
$$C_2H_5$$

$$CH_3COOSi[OCOCH\text{-}(CH_2)_3CH_3]_3$$
$$C_2H_5$$

Avec ces agents réticulants peuvent être associés des silanes portant seulement chacun deux groupes hydrolysables ; ces silanes répondent à la formule

$$R''_2Si(OCOR')_2$$

dans laquelle les symboles R' ont la signification du symbole R' de la formule

$$R_pSi(OCOR')_{4-p}$$

et les symboles R" ont la signification du symbole R de cette même formule ou représente un radical tertiobutoxy de formule $(CH_3)_3C\text{-}O\text{-}$.

A titre d'exemples de ces silanes, peuvent être cités ceux de formules ci-après :

$$(CH_3)_2Si(OCOCH_3)_2$$

$$CH_2{=}CH(CH_3)Si(OCOCH_3)_2$$

$$(C_6H_5)_2Si(OCOCH_3)_2$$

$$[(CH_3)_3C\text{-}O]_2Si(OCOCH_3)_2$$

$$(CH_3)_2Si[OCOCH(C_2H_5)(CH_2)_3CH_3]_2$$

$$[(CH_3)_3CO]_2Si[OCOCH(C_2H_5)(CH_2)_3CH_3]_2$$

La quantité molaire mise en oeuvre des silanes de formule $R''_2Si(OCOR')_2$ par rapport à celle mise en oeuvre des silanes réticulants de formule $R_pSi(OCOR')_{4-p}$ n'est pas étroitement définie ; il est nécessaire cependant qu'elle ait une limite supérieure de manière que le mélange des 2 types de silanes renferme toujours en moyenne au moins 2,5 groupes -OCOR' pour un atome de silicium.

Ainsi, en prenant par exemple 1 mole du silane réticulant de formule $RSi(OCOR')_3$ (avec p = 1), il faut lui associer au plus 1 mole du silane $R''_2Si(OCOR')_2$ ; de même en prenant 1 mole du silane réticulant de formule $Si(OCOR')_4$ (avec p = 0) il faut lui associer au plus 3 moles de silane $R''_2Si(OCOR')_2$.

Le rôle principal des silanes de formule $R''_2Si(OCOR')_2$ est de coupler les chaînes des polymères de polysiloxane (notamment $\alpha$- $\omega$ di(hydroxy)diorganopolysiloxaniques) ce qui permet d'obtenir des élastomères ayant de bonnes caractéristiques physiques en partant de compositions renfermant des polymères dont la viscosité est relativement faible, par exemple allant de 200 à 5 000 mPa.s à 25°C.

De manière tout à fait préférée, le réticulant est au moins un polyacétoxysilane, préférentiellement méthyl et/ou éthyltriacétoxysilane, en vue de la formation d'un élastomère acétique.

De manière préférée selon l'invention, le polysiloxane polyhydroxylé de départ est au moins une huile $\alpha$ , $\omega$ di (hydroxy)diorganopolysiloxanique de viscosité comprise entre 200 et 1 000 000 mPa.s à 25°C, de préférence entre 500 et 200 000, constituée d'une succession de motifs diorganosiloxy de motif $R_2SiO$ où les symboles R, identiques ou différents, représentent des radicaux hydrocarbonés ayant de 1 à 8 atomes de carbone, substitués ou non par des atomes d'halogènes ou des groupes cyano, et avec éventuellement des motifs monoorganosiloxy de formule $RSiO_{1,5}$ et/ou des motifs siloxy de formule $SiO_2$, dans la proportion d'au plus 2% par rapport au nombre de motifs diorganosiloxy.

De préférence, les radicaux hydrocarbonés R sont tels que définis ci-dessus dans le cadre de la description des

réticulants selon l'invention.

A titre d'exemple de motifs représentés par la formule $R_2SiO$ on peut citer ceux de formules :

$$(CH_3)_2SiO$$

$$CH_3(CH_2{=}CH)SiO$$

$$CH_3(C_6H_5)SiO$$

$$(C_6H_5)_2SiO$$

$$CF_3CH_2CH_2(CH_3)SiO$$

$$NC\text{-}CH_2CH_2(CH_3)SiO$$

$$NC\text{-}CH(CH_3)CH_2(CH_2{=}CH)SiO$$

$$NC\text{-}CH_2CH_2CH_2(C_6H_5)SiO$$

Il doit être compris, selon une variante de l'invention, que l'on peut utiliser comme polymères des copolymères ou un mélange de polymères di(hydroxy)diorganopolysiloxaniques qui diffèrent entre eux par le poids moléculaire et/ou la nature des groupements liés aux atomes de silicium.

Ces copolymères $\alpha$ , $\omega$ di(hydroxy)diorganopolysiloxaniques sont commercialisés ; en outre, ils peuvent être aisément fabriqués. L'une des techniques de fabrication les plus courantes consiste, dans une première phase, à polymériser des diorganocyclopolysiloxanes à l'aide de quantités catalytiques d'agents alcalins ou acides, puis à traiter les polymérisats avec des quantités calculées d'eau (brevets français FR-A-1 134 005 ; FR-A-1 198 749 ; FR-A-1 226 745) ; cet apport d'eau, qui est d'autant plus élevé que les polymères à préparer ont une viscosité plus faible, peut être remplacé en totalité ou en partie par des huiles $\alpha$ , $\omega$ di(hydroxy)diorganopolysiloxaniques de faible viscosité, par exemple allant de 5 à 200 mPa.s à 25°C, ayant un taux élevé de radicaux hydroxyles, par exemple de 3 à 14 %.

De manière préférée, R sera un groupement méthyle.

Les compositions selon l'invention peuvent en outre avantageusement comprendre au moins une résine silicone. Ces résines silicones sont des polymères organopolysiloxanes ramifiés bien connus et disponibles dans le commerce. Elles présentent, par molécule, au moins deux motifs différents choisis parmi ceux de formule $R'''_3\ SiO_{0,5}$ (motif M), $R'''_2SiO$ (motif D), $R'''SiO_{1,5}$ (motif T) et $SiO_2$ (motif Q).

Les radicaux R''' sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone inclus. Plus particulièrement, on peut citer comme radicaux R alkyle, les radicaux méthyle, éthyle, isopropyle, tertiobutyle et n-hexyle.

Ces résines sont de préférence hydroxylées et ont dans ce cas une teneur pondérale en groupe hydroxyle comprise entre 5 et 500 meq/100 g.

Comme exemple de résines, on peut citer les résines MQ, les résines MDQ, les résines TD et les résines MDT.

La composition pourra d'une manière générale comprendre une ou plusieurs charges notamment choisies parmi les charges de renforcement et de remplissage. Ces charges seront de préférence présentes à raison de 0 à 150 parties en poids de charge pour 100 parties d'huile réactive. Ces charges peuvent se présenter sous la forme de produits très finement divisés dont le diamètre particulaire moyen est inférieur à 0,1 µm. Parmi ces charges figurent en particulier les silices de combustion et les silices de précipitation ; leur surface spécifique est généralement supérieure à 40 $m^2/g$ et se situe le plus souvent dans l'intervalle 50-300 $m^2/g$.

Ces charges peuvent également se présenter sous la forme de produits plus grossièrement divisés, de diamètre particulaire moyen supérieur à 0,1µm. Comme exemples de telles charges, on peut citer en particulier le quartz broyé, les silices de diatomées, l'argile calcinée, l'oxyde de titane du type rutile, les oxydes de fer, de zinc, de chrome, de

zirconium, de magnésium, les différentes formes d'alumine (hydratée ou non), le nitrure de bore, le lithopone, le métaborate de baryum ; leur surface spécifique est généralement inférieure à 30 $m^2/g$.

Des charges peuvent avoir été modifiées en surface, par traitement avec les divers composés organosiliciques habituellement employés pour cet usage. Ainsi, ces composés organosiliciques peuvent être des organochlorosilanes, des diorganocyclopolysiloxanes, des hexaorganodisiloxanes, des hexaorganodisilazanes ou des diorganocyclopolysilazanes (brevets français FR-A-1 126 884, FR-A-1 136 885, FR-A-1 236 505, brevet anglais GB-A-1 024 234). Les charges traitées renferment, dans la plupart des cas, de 3 à 30 % de leur poids de composés organosiliciques. Les charges peuvent être ainsi traitées avant ou après leur incorporation dans la formule.

Les charges peuvent être constituées d'un mélange de plusieurs types de charges de granulométries différentes.

Comme cela est connu en soi, la composition pourra aussi comprendre un catalyseur de polycondensation, notamment un composé de l'étain.

De même, la composition pourra aussi comprendre des huiles non réactives connues en soi comme plastifiants.

L'invention est en particulier utile dans la fabrication de joints en mousse, notamment dans des applications en milieu sévère (température élevée, intempéries, UV), telles que joints pour éclairage public, phares d'automobiles, joints de pièces en matière plastique présentes sous le capot d'automobiles et analogues, ainsi que dans la mise en oeuvre de mousses de remplissage, notamment pour le bâtiment.

L'invention concerne aussi les objets en mousse, en particulier les joints en mousse, susceptibles d'être obtenus à partir des compositions selon l'invention, en particulier après passage en mélangeur dynamique ou en mélangeur statique.

La présente invention a également pour objet un kit destiné à produire une mousse élastomère, comprenant deux parties séparées, une première partie comprenant la formule d'élastomère vulcanisable à froid de polycondensation du type décrit ci-dessus et une deuxième partie comprenant le carbonate selon l'invention, préférentiellement sous forme d'empâtage avec une huile $\alpha,\omega$ hydroxylée et préférentiellement de l'eau. Une charge pourra également être prévue dans cette deuxième partie. De préférence, le kit se présentera sous la forme d'une cartouche à deux compartiments, agencée de manière à co-extruder, en les mélangeant, les première et deuxième parties (mélangeur statique).

La présente invention va être maintenant décrite plus en détails à l'aide d'exemples de réalisation non limitatifs, se référant au dessin annexé dans lequel :

- la figure 1 présente la réaction de fonctionnalisation d'un PDMS avec un méthyltriacétoxysilane et la réticulation à l'humidité ;
- la figure 2 présente le mécanisme de moussage et d'accélération d'un élastomère vulcanisable à froid acétique par le bicarbonate de sodium.

**1/ Réactions mise en oeuvre :**

La figure 1 représente, à titre d'exemple, la réaction générale de fonctionnalisation d'un PDMS (polydiméthylsiloxane) à l'aide d'un méthyltriacétoxysilane servant de réticulant.

Après cette réaction, on obtient une composition qui apparaît dans la partie "conservation du produit" à la figure 1 et qui est constituée d'un polyacétoxyorganopolysiloxane, d'acétoxysilane et d'acide acétique. En général, c'est la composition que l'on retrouve dans la cartouche prête à l'emploi. La dernière partie de la figure décrit de manière générale la réticulation au contact de l'humidité atmosphérique.

On se réfère à la figure 2 qui représente le mécanisme de moussage et d'accélération de l'élastomère acétique vulcanisable à froid par le bicarbonate de sodium. On voit clairement que l'action du bicarbonate de sodium sur l'acide acétique présent dans la composition décrite dans la partie "conservation du produit" de la figure 1, conduit à la génération d'eau et de gaz carbonique ; cette eau est ensuite mise à profit pour la réticulation de l'élastomère et donc l'accélération de cette réticulation si l'on compare à la seule action de l'humidité de l'atmosphère. Le démarrage de la réaction peut donc se faire en présence de l'acide acétique présent à l'origine dans la composition obtenue de la fonctionnalisation du PDMS. En l'absence d'acide acétique initial, l'acide acétique sera libéré par la réaction de réticulation. Toutefois, dans le cas où l'on utilise de l'huile réactive pour empâter le bicarbonate de sodium, cette huile réactive pourra réagir directement avec l'acétoxysilane présent dans la composition issue de la fonctionnalisation du PDMS et générer ainsi immédiatement une quantité d'acide acétique qui va permettre de lancer la réaction avec le bicarbonate de sodium.

**2 - Compositions : (en parties)**

**Partie A 1 :**

| | |
|---|---|
| huile PDMS α, ω hydroxylée (viscosité 20 000 mPa.s) | 100 p |
| huile PDMS α, ω hydroxylée (viscosité 14 000 mPa.s) | 7 p |
| huile PDMS α, ω méthylée (viscosité 500 mPa.s) | 11 p |

| | |
|---|---|
| Silice de combustion (200 $m^2$/g) | 7 p |
| Silice de combustion traitée in situ par l'hexaméthyldisilazane (150 $m^2$/g initial) | 7 p |
| Méthyltriacétoxy silane | 3 p |
| Ethyltriacétoxy silane | 1 p |
| Dilaurate de di n-octyl étain | 0,1 p |

**Partie A 2 :**

| | |
|---|---|
| huile PDMS α, ω hydroxylée (viscosité 20 000 mPa.s) | 25 p |
| huile PDMS α, ω hydroxylée (viscosité 3 500 mPa.s) | 75 p |
| Silice de combustion (200 $m^2$ /g) | 13 p |
| Quartz broyé | 80 p |
| Méthyltriacétoxy silane | 2,3 p |
| Ethyltriacétoxy silane | 0,7 p |

**Partie B 1x :**

| | |
|---|---|
| huile PDMS α, ω hydroxylée (viscosité 20 000 mPa.s) | 48 p |
| Silice de combustion (150 $m^2$/g) | 1 p |
| Bicarbonate de sodium | 24 p |
| Eau incorporée au bicarbonate | x p |

**Partie B 2x :**

| | |
|---|---|
| huile PDMS α, ω hydroxylée (viscosité 20 000 mPa.s) | 48 p |
| Silice de combustion (150 $m^2$/g) | 1 p |
| Bicarbonate de sodium | 48 p |
| Eau incorporée au bicarbonate | x p |

Le bicarbonate de sodium utilisé dans les exemples avait une granulométrie comprise entre 20 et 30 µm et une pureté de 99,5 %.

**3. Propriétés :**

<u>Exemple 1 : partie A1 + partie B 1x (x compris entre 0,7 et 2,4 p).</u>

Le moussage et la réticulation sont obtenus à l'aide d'un mélangeur statique (tube équipé d'un dispositif de chicanes assurant un croisement des flux des parties introduites) à 23 °C en moins de 5 minutes. Les mousses obtenues sont homogènes avec une porosité à cellules fermées et des tailles de pores de l'ordre de 1 mm. Les densités et duretés SHORE 00 obtenues sont reportées dans le tableau en fonction de la teneur en eau de la partie B :

| Teneur en eau de la partie B x (p) | | 0,7 | 1,1 | 1,7 | 2,4 |
|---|---|---|---|---|---|

(suite)

| | | | | | |
|---|---|---|---|---|---|
| Densité<br>Dureté SHORE 00 | 0,7<br>25 | 0,7<br>25 | 0,5<br>15 | 0,4<br>10 | |

Exemple 2 : partie A1 + partie B 2x (x = 0,5 p)

Le moussage et la réticulation sont obtenus à l'aide d'un mélangeur statique à 50°C en 3 à 5 minutes. La structure cellulaire est homogène, du type cellules fermées avec des tailles de pores de l'ordre de 300 µm. Les propriétés sont les suivantes :

| | |
|---|---|
| Densité : | 0,7 |
| Dureté SHORE A : | 5 |
| Propriétés mécaniques : | |
| Résistance rupture | 0,1 mPa |
| Allongement rupture | 500 % |

Déformation rémanente à la compression :

- 30 %/24 H/23°C <0,5 %
- 50 %/72 H/23°C < 1 %
- 30 %/24 H/70°C < 5 %

Exemple 3 : partie A1 + partie B 2x (x = 1 p)

Le moussage et la réticulation sont obtenus à l'aide d'un mélangeur statique à 23°C en 10 minutes. La structure cellulaire est homogène, du type cellules fermées avec des tailles de pore de l'ordre de 400 µm. Les propriétés sont les suivantes :

| | |
|---|---|
| Densité : | 0,7 |
| Dureté SHORE A : | 5 |
| Propriétés mécaniques : | |
| Résistance rupture | 0,1 mPa |
| Allongement rupture | 400 % |

Déformation rémanente à la compression :

- 30%/24 H/23°C <1%
- 50%/72 H/23°C <2%
- 30%/24 H/70°C <20%

Exemple 4 : partie A2 + partie B 2x (x = 1 p)

Le moussage et la réticulation sont obtenus à l'aide d'un mélangeur statique à 50°C en 5 minutes. La structure cellulaire est homogène, du type cellules fermées avec des tailles de pores de l'ordre de 600 µm. Les propriétés sont les suivantes :

| | |
|---|---|
| Densité : | 0,6 |
| Dureté SHORE A : | 5 |
| Propriétés mécaniques : | |
| Résistance rupture | 0,6 mPa |
| Allongement rupture | 200 % |

Déformation rémanente à la compression :

- 30 %/24 H/23°C 0 %
- 50%/72 H/23°C 0%
- 30%/24 H/70°C <2%

## Revendications

1. Composition organopolysiloxanique génératrice de mousse élastomère, comprenant au moins un polyacyloxyorganopolysiloxane obtenu par fonctionnalisation, par un polyacyloxysilane, d'au moins une huile réactive qui est un polysiloxane polyhydroxylé destiné à réagir en présence d'eau pour former l'élastomère avec formation d'acide de formule R'COOH, dans laquelle R' représente un radical hydrocarboné exempt d'insaturation aliphatique et ayant de 1 à 15 atomes de carbone, un agent porophore et éventuellement de l'eau, la composition comprenant à titre d'agent porophore, au moins un carbonate acide ou neutre d'un métal alcalin ou alcalino-terreux qui, par réaction avec l'acide R'COOH, donne du gaz carbonique et préférentiellement de l'eau.

2. Composition selon la revendication 1, caractérisée en ce que l'agent porophore est un bicarbonate , de préférence le bicarbonate de sodium.

3. Composition selon la revendication 1 ou 2, caractérisée en ce que le carbonate est hydraté, notamment à raison de 0,01 à 20 % en poids d'eau, de préférence de 0,1 à 3 %.

4. Composition selon l'une quelconque des revendications 1 à 3, caractérisée en ce qu'elle comprend de 1 à 50 % en poids de carbonate par rapport à la composition totale, de préférence de 10 à 35 % en poids.

5. Composition selon l'une quelconque des revendications 1 à 4, caractérisée en ce que le polyacyloxyorganopolysiloxane est obtenu par fonctionnalisation de l'huile réactive par un polyacyloxysilane dans des conditions telles que le rapport molaire fonctions acyloxy du polyacyloxysilane/fonctions hydroxyles de l'huile réactive soit supérieur à 1 et de préférence compris entre 2 et 10.

6. Composition selon l'une quelconque des revendications 1 à 5, caractérisée en ce que le polyacyloxysilane est au moins un composé répondant à la formule

$$R_p\ Si(OCOR')_{4-p}$$

dans laquelle le symbole R représente un radical hydrocarboné ayant de 1 à 8 atomes de carbone, substitués ou non par des atomes d'halogènes ou des groupes cyano, le symbole R' représente un radical hydrocarboné exempt d'insaturation aliphatique, ayant de 1 à 15 atomes de carbone, et le symbole p étant 0 ou 1.

7. Composition selon la revendication 6, caractérisée en ce qu'elle comporte en outre un composé de formule

$$R''_2\ Si(OCOR')_2$$

dans laquelle R" a la signification du symbole R de la formule de la revendication 6 ou représente un radical tertiobutoxy de formule $(CH_3)_3C\text{-}O\text{-}$ et R' a la signification du symbole R' de la formule de la revendication 6.

8. Composition selon l'une quelconque des revendications 1 à 7, caractérisée en ce que le polyacyloxysilane est au moins un polyacétoxysilane, de préférence méthyl-et/ou éthyltriacétoxysilane.

9. Composition selon l'une quelconque des revendications 1 à 8, caractérisée en ce que l'huile réactive de départ est au moins une huile $\alpha$, $\omega$ dihydroxy diorganopolysiloxanique de viscosité comprise entre 200 et 1 000 000 mPa.s à 25°C, de préférence entre 500 et 200 000 mPa.s, constituée d'une succession de motifs diorganosiloxy de motifs $R_2SiO$ où les symboles R, identiques ou différents, représentent des radicaux hydrocarbonés ayant de 1 à 8 atomes de carbone, substitués ou non par des atomes d'halogène ou des groupes cyano et avec éventuellement des motifs monoorganosiloxy de formule $RSiO_{1,5}$ et/ou des motifs siloxy de formule $SiO_2$ dans la proportion d'au

plus 2 % par rapport aux motifs diorganosiloxy.

**10.** Composition selon la revendication 9, caractérisée en ce que R est méthyle.

**11.** Composition selon l'une quelconque des revendications 1 à 10, caractérisée en ce qu'elle comprend en outre une résine silicone, de préférence une résine hydroxylée.

**12.** Composition selon l'une quelconque des revendications 1 à 11, caractérisée en ce qu'elle comprend en outre une ou plusieurs charges notamment choisies parmi les charges de renforcement et de remplissage.

**13.** Composition selon la revendication 12, caractérisée en ce qu'elle comprend de 0 à 150 parties en poids de charge pour 100 parties d'huile réactive.

**14.** Composition selon l'une quelconque des revendications 1 à 12, caractérisée en ce que le carbonate hydraté se présente sous la forme d'un empâtage en mélange avec une huile réactive du type polysiloxane polyhydroxylé.

**15.** Composition selon la revendication 14, caractérisée en ce que l'huile réactive est une huile selon la revendication 9 ou 10.

**16.** Composition selon l'une quelconque des revendications 1 à 15, caractérisée en ce qu'elle comprend un catalyseur métallique de polycondensation, de préférence, un composé de l'étain.

**17.** Composition selon l'une quelconque des revendications 1 à 16, caractérisée en ce que le carbonate présente une granulométrie comprise entre 5 et 100 $\mu m$, de préférence entre 20 et 30 $\mu m$.

**18.** Composition selon l'une quelconque des revendications 1 à 17, caractérisée en ce qu'elle se présente en deux parties, une partie A comprenant la formule polyacyloxyorganopolysiloxanique et une partie B comprenant le carbonate, de préférence sous forme d'un empâtage avec une huile $\alpha$, $\omega$ hydroxylée.

**19.** Objet, notamment joint, en mousse élastomère susceptible d'être obtenu par la mise en oeuvre d'une composition selon l'une quelconque des revendications 1 à 18, de préférence après passage dans un mélangeur dynamique ou dans un mélangeur statique.

**20.** Kit pour délivrer une composition selon la revendication 18, comprenant une cartouche à deux compartiments, chaque compartiment comprenant une partie de composition, la cartouche étant agencée de manière à co-extruder, en les mélangeant, ces deux parties.

FIG. 1

### FONCTIONNALISATION DU PDMS

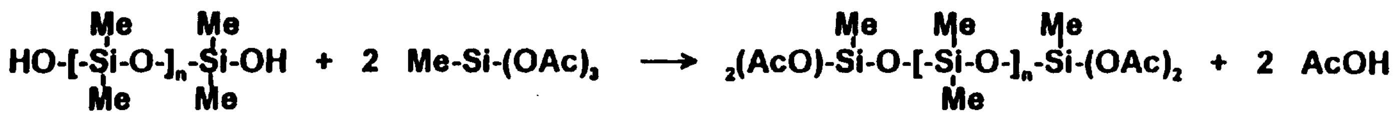

$Me = CH_3$ $Ac = CH_3CO$

### CONSERVATION DU PRODUIT

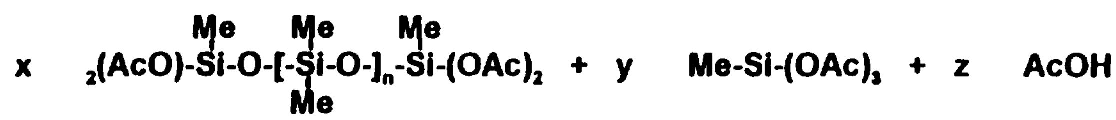

### RETICULATION AU CONTACT DE L'HUMIDITE ATMOSPHERIQUE

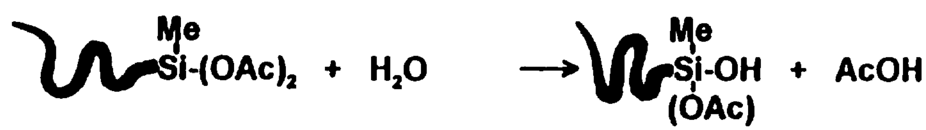

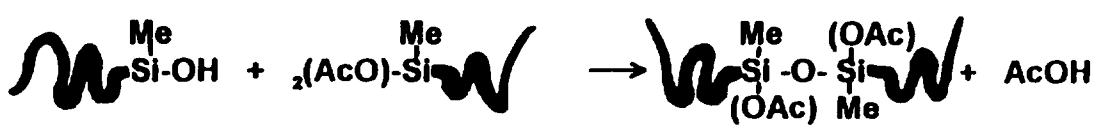

FIG. 2

$$CH_3COOH + CO_3HNa \longrightarrow CH_3COONa + H_2O + CO_2$$

$$H_2O + CH_3COO\text{-}Si\equiv \longrightarrow HO\text{-}Si\equiv + CH_3COOH$$

$$\equiv Si\text{-}OH + CH_3COO\text{-}Si\equiv \longrightarrow \equiv Si\text{-}O\text{-}Si\equiv + CH_3COOH$$

---

$$CH_3COOH + CO_3HNa + 2\ CH_3COO\text{-}Si\equiv \longrightarrow \equiv Si\text{-}O\text{-}Si\equiv + CH_3COONa + CO_2 + 2\ CH_3COOH$$

Office européen des brevets

# RAPPORT DE RECHERCHE EUROPEENNE

Numero de la demande
EP 96 42 0300

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y,D | EP-A-0 235 052 (RHONE-POULENC)<br>* revendication 1 * | 1-20 | C08L83/06<br>C08K3/26<br>C08J9/08 |
| Y | FR-A-1 270 725 (DOW CORNING)<br>* page 1, ligne X - ligne Y * | 1-20 | |
| A | EP-A-0 044 891 (GENERAL ELECTRIC)<br>* revendication 1 * | 1 | |
| A | DE-A-12 45 124 (LECHLER)<br>* exemple 1 * | 1 | |

DOMAINES TECHNIQUES RECHERCHES (Int.Cl.6)

C08L
C08K
C08J

Le présent rapport a été établi pour toutes les revendications

| Lieu de la recherche | Date d'achèvement de la recherche | Examinateur |
|---|---|---|
| LA HAYE | 25 Novembre 1996 | Lentz, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)